(19) Europäisches Patentamt
European Patent Office
Office européen des brevets

(11) **EP 1 797 765 B1**

(12) **EUROPEAN PATENT SPECIFICATION**

(45) Date of publication and mention
of the grant of the patent:
**04.05.2016 Bulletin 2016/18**

(51) Int Cl.:
*A23C 19/09* (2006.01)   *A23L 5/00* (2016.01)
*A23P 20/00* (2016.01)   *A01J 27/04* (2006.01)

(21) Application number: **06077269.6**

(22) Date of filing: **15.12.2006**

(54) **Filled cheese product**

Gefülltes Käseprodukt

Produit fourré à base de fromage

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **15.12.2005 NL 1030675**

(43) Date of publication of application:
**20.06.2007 Bulletin 2007/25**

(73) Proprietor: **FrieslandCampina Nederland B.V.
3818 LE Amersfoort (NL)**

(72) Inventors:
• **Verhoeven, Vincent Wilhelmus Andreas
9728 VK Groningen (NL)**
• **Van der Schaaf, Andre
9103 NE Dokkum (NL)**
• **Traa, Hubert Michel
8103 CJ Raalte (NL)**
• **Fransen, Rudi Hendrik
9001 NM Grou (NL)**

(74) Representative: **V.O.
P.O. Box 87930
2508 DH Den Haag (NL)**

(56) References cited:
**EP-A- 0 260 194       EP-A- 0 358 983
US-A1- 2002 150 654   US-A1- 2003 129 281
US-B- 6 406 731**

**Description**

The invention relates to a method for preparing a filled cheese product where the filling is completely enclosed by a covering comprising cheese. The invention further relates to a filled cheese product, in particular a filled cheese snack, where the filling is completely enclosed by a covering comprising cheese.

Various methods for producing shaped filled cheese products are known. For instance, EP 713 649 A1 describes a method for injecting plastic curd cheese (such as Mozzarella) with a filling. However, the product obtained thereby has no ripened taste. In addition, the product is not shape-retaining, which limits the field of application very much.

EP 0 358 983 A1 describes a coextrusion method, where two different types of curd are cold-coextruded. A ripening step is necessary to provide the product with a ripened taste appreciated by consumers, and in addition, only cheese filling is used.

US 2003/129281 relates to a coextruded cheese product comprising two discrete phases. In a number of embodiments, a first phase encloses a second phase in the longitudinal direction. A product whose second phase is also enclosed by the first phase at the end faces of the product is not disclosed. This *inter alia* has the drawback that the second phase can quite easily egress from the product, particularly if the second phase is liquid. Other methods for making filled cheese products start from processed cheese. Here, processed cheese is defined as cheese which is or has been heated to above the melting point, and through which additives such as for instance melting salt, starch, hydrocolloids, protein powder, water, milk fat or vegetable fats are homogeneously mixed. By the choice of additives, the properties of the processed cheese can be controlled. Due to the heat treatment and the fact that the cheese is homogeneously mixed, processed cheese yields a different taste and mouth feel than natural cheese. Herein, natural cheese is defined as in CODEX GENERAL STANDARD FOR CHEESE CODEX STAN A-6-1978, Rev.1-1999, Amended 2003:

Cheese is the ripened or unripened soft, semi-hard, hard, or extra-hard product, which may be coated, and in which the whey protein/casein ratio does not exceed that of milk, obtained by:

(a) coagulating wholly or partly the following raw materials: milk and/or products obtained from milk, through the action of rennet or other suitable coagulating agents by partially draining the whey resulting from such a coagulation; and/or

(b) processing techniques involving coagulation of milk and/or products obtained from milk which give an end-product with similar physical, chemical and organoleptic characteristics as the product defined under (a).

For the use of filled completely enclosed products, processed cheese is often processed when hot. Thus, in EP 1 079 698 (Fromageries Bel), melted processed cheese is coextruded with a filling in a mold, then the processed cheese is cooled down further to a solid product. Such a method has a number of drawbacks. Products formed with such a method from processed cheese have a taste which is inferior to the taste of natural cheese. In addition, the texture is different from the texture of natural cheese.

In conclusion, it can be stated that, in the prior art, no method is yet known where, with the aid of natural cheese, a shaped composite cheese product can be made where the filling is completely enclosed by the cheese. Here, in particular, products made from semi-hard or hard natural cheese are not known.

In particular, no methods are known for obtaining a filled cheese product with a hard or semi-hard natural cheese or a composition comprising such a cheese as a covering, with good visual properties, such as a smooth outer surface of the product, a good consistency of the covering and pleasant organoleptic properties, in particular a taste and/or texture which are at least substantially similar to the natural cheese used to make the product.

In particular with use of natural cheese, the inventors have found that process conditions are important for obtaining a product with properties appreciated by the consumer.

It is an object of the invention to provide a filled cheese product, in particular a filled cheese snack, where the covering comprises a natural cheese or a natural cheese-containing composition and where the covering completely encloses the filling.

It is in particular an object to provide such a filled cheese product whose outer surface has a high degree of smoothness. It is in particular an object to provide a filled cheese product whose covering completely encloses the filling and the covering has the taste and/or the texture of a hard or semi-hard natural cheese.

It is further an object to provide a method for preparing such a cheese product.

In one aspect, it is an object to provide a manner for controlling at least one property of the covering.

It has now surprisingly been found that it is possible to prepare a product meeting one or more objects set starting from a natural cheese.

Therefore the invention relates to a method for preparing a shaped and filled cheese product, comprising coextruding a first edible phase and a second edible phase, while the second phase (filling) is completely enclosed by the first phase (covering), which first phase comprises semi-hard and/or hard natural cheese, wherein a semi-hard cheese has a moisture content of 42 to 55 wt.%, and a hard cheese has a moisture content of less than 42 wt.%, wherein the coextruded phase are compressed with the aid of a diaphragm valve, such that the first phase completely encloses the second phase and a discrete product is formed, and wherein, during the extrusion, at least the first phase has a temperature of maximally 7.0°C wherein the pH of the second phase is between 2 and 6, and wherein the water activity of the first phase and of the second phase is between 0.85 and 0.98.

The cheese may optionally be used in combination with curd and/or other products of dairy origin as well as with other, non-protein-containing dairy additions and non-dairy-based additives. Also, a combination of different types of cheese may be used.

The invention further relates to an extruded shaped natural cheese product, obtainable by means of the method of the invention, comprising a covering and a filling, wherein the covering comprising a semi-hard and/or hard natural cheese, wherein a semi-hard cheese has a moisture content of 42 to 55 wt.%, and a hard cheese has a moisture content of less than 42 wt.%, the covering completely encloses the filling, and the outer surface of the covering has a smoothly flowing shape at least at the ends of the product.

Fig. 1 shows some filled cheese snacks according to the invention.
Fig. 2 shows a cut cheese snack according to the invention.
Fig. 3 shows an instrument for measuring the viscosity.
Fig. 4 shows the diffusion of preservative from the filling to the covering as a function of time.

It has surprisingly been found that, precisely at a low temperature of the cheese, it is possible to completely enclose the filling.

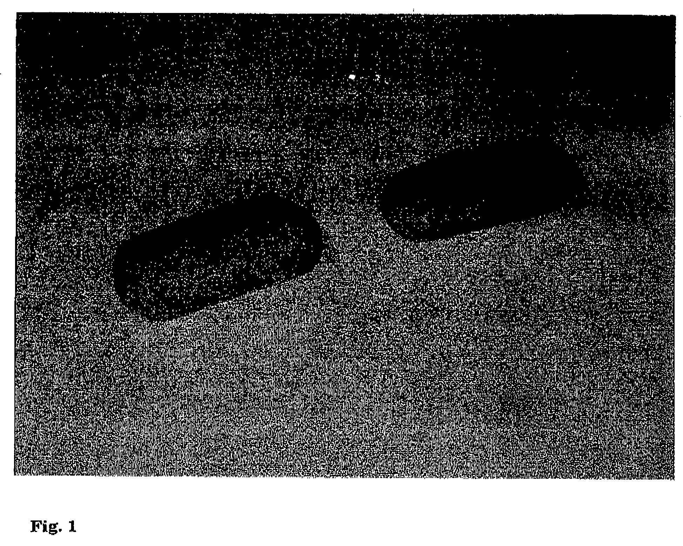

It has also been found that the method provides the possibility to prepare a cheese product whose outer surface has a high degree of smoothness (see Fig. 1), compared with products which have been prepared at a higher temperature. Such products typically have frayed ends and/or cracks on the outer surface, in particular at any corners/edges on the product, whereas, on a product according to the invention, with the naked eye, typically at least substantially no undesired irregularities can be seen. In the framework of the invention, undesired irregularities are particularly understood to mean irregularities such as cracks in the surface which are so large/deep that they can result in a leak in the covering phase, from which the filling can egress from the product.

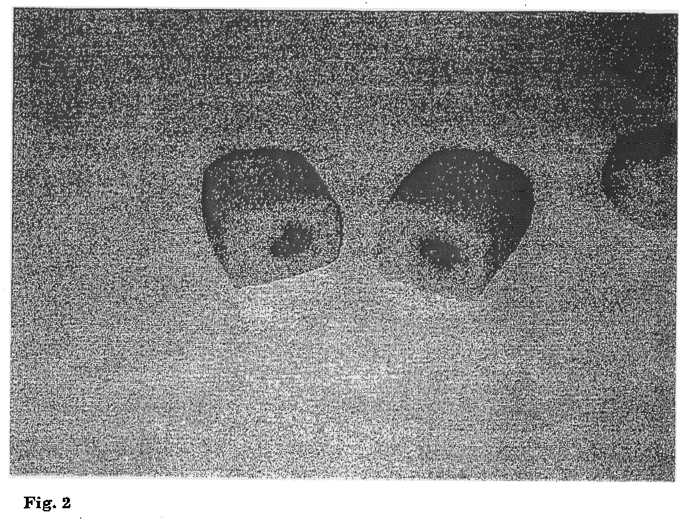

If desired, a product according to the invention (as shown in Fig. 2) has rounded corners, particularly at the ends, instead of relatively sharp corners such as with a cut cheese cube. In an embodiment with rounded corners, it seems like the front side and back side of the product have been scooped off with an ice cream scoop. A smoothly flowing shape at the ends of the extruded product, such as curved end faces, contributes to the visual attraction of the product.

In addition, it has been found that the taste and texture of the cheese used as the starting material (optionally in combination with other ingredients) is at least substantially preserved in a product manufactured according to the invention.

The second phase (the filling) in a cheese product according to the invention has more degrees of freedom (such as viscosity) than an open product, due to the fact that the second phase is completely enclosed by the cheese.

The invention particularly provides a product with a low-viscous filling, without this filling having the tendency to flow out of the product, which generally is a problem with an open product, such as a product with open ends.

In addition, this cheese product has a different consumption experience than an open composite cheese product due to the fact that the second phase is not visible before consumption. It has also been found that the properties of the covering can be influenced with the second phase.

In a method according to the invention, the first phase, comprising cheese of the semi-hard or hard type, is typically added to a first feeding device of an extruder.

The feeding unit of the first phase typically comprises an extruder in which little shearing takes place, in order to leave the structure of the first phase as intact as possible. In a preferred method, the shearing rate is maximally 200 $s^{-1}$. More preferably, the shearing rate is maximally 100 $s^{-1}$, in particular maximally 50 $s^{-1}$. For practical reasons, the shearing rate is typically at least 1 $s^{-1}$.

The cheese in the first phase (for obtaining the covering) may be added in the form of blocks or grated cheese. Typically, the height, length and width of the blocks are maximally 10 cm, preferably maximally 5 cm.

In the extruder, the first phase is optionally reduced, mixed, compressed and dosed to the coextrusion device. An example for such a feeding device is the Cornucopia-400 (Rheon, Düsseldorf, Germany).

The second edible phase is - typically simultaneously - added to a second feeding device of the second phase. The second device may comprise a same feeding unit as the first one, in particular if a second phase with a relatively low viscosity is chosen. In such a case, an excellently suitable feeding device is a positive displacement pump, such as for instance a mono pump.

Optionally, the first and second phase may be coextruded together with one or more further phases.

The product coming from the extruder is typically continuously divided into pieces of the desired size. For a good enclosure of the filling, the product coming from the extruder is divided into pieces with a diaphragm valve. This diaphragm valve presses the outer phase at the ends over the inner phase in such a manner that the outer phase completely encloses the inner phase. For a good enclosure of the filling by the covering, preferably a valve is used with a relatively large thickness, in particular a thickness of at least 1 mm, more in particular of 5-20 mm. With a view to a good enclosure, use may also be made of a valve with a curved (convex) or inclined contact surface.

Examples of a diaphragm valve can be found with the Cornucopia-400 (Rheon, Düsseldorf, Germany) and the Coex 893 (Vemag, Verden, Germany).

Due to the choice in coextrusion geometry, various shapes can be made. For instance, square, triangular, round, oval, heart-shaped, hexagonal or star-shaped products can be made. The cross section of the filling does not need to have the same geometry as the covering. The cross section of the filling may also have various shapes, such as for instance square, triangular, round, oval, heart-shaped, hexagonal or star-shaped. Both the cross section (width, height) and the length of the end product are particularly directed to the use of the filled product as a snack. The cross section may particularly be chosen in the range of 1 to 5 cm, the length may particularly be chosen in the range of 1 to 25 cm.

Optionally, also, one or more extra phases may be added by means of multiple extrusion. Optionally, also, a coating may be provided between first and second phase, in particular to prevent or selectively control transfer between first and second phase.

The outer layer of the product is a cheese-containing layer (the layer formed by the first phase). In particular, the outer surface of the product is preferably free from a layer formed with the aid of batter, such as a breadcrumb layer.

In one embodiment, the extruded product is packaged by the piece or by two pieces. In another embodiment, a larger amount of the products is packaged in a packaging, such as a bag. Preferably, the packaging takes place automatically as part of the same continuous process line as the extrusion.

Preferably, the product is packaged without being heated or having been heated. Heating influences the properties of the coverage, such as texture, taste, color and/or the appearance (smoothness) of the outer surface. Heating is particularly understood to mean a treatment such as deep-frying or baking or another temperature treatment in which the cheese melts. The product is preferably packaged without having been heated to over a temperature of 25°C.

It has been found that the processing temperature of the cheese has an important influence on the closing and the surface of the product. In contrast to what a skilled person expects, we have found that a good closure and a smooth surface are obtained with a low feed temperature of the cheese. For a good enclosure and/or smooth surface, it is desired that the first phase be extruded at a temperature of maximally 7.0°C, preferably of 4 to 7°C. With a cheese temperature within this range, it has been found that a smooth surface of the formed covering is obtained. In particular, by means of the invention, it is possible to manufacture a product with such a smoothness that at least substantially no large irregularities such as frayed ends and/or cracks are visible with the naked eye, particularly on the corners and the edges (insofar as present). Thus, this well matches the preference of the consumer.

Of extrusion at a low temperature, it has been found that fine rounded corners can be formed (if a product with corners is desired) and/or that a product is formed which has no or at least few frayed ends and/or cracks visible with the naked eye.

In particular, it is thus possible to obtain a product in which the first phase completely encloses the second one, such that the risk of leaking of the second phase from the covering is low, compared to a product where extrusion takes place at a high temperature.

Of extrusion at too high a temperature, it has particularly been found that the enclosure of the second phase at the end face of the extruded product is less adequate than at a low temperature, so that a leak can occur in the covering. Of a product which has been extruded at too high a temperature, it has further been found that particularly in the longitudinal side(s), cracks can be present which can form leakage spots from which the enclosed phase can leak from the product, particularly if this phase is liquid.

The temperature of the second phase is less important than the temperature of the first phase. For practical reasons, this is typically also extruded in an unheated manner, such as at a temperature of maximally 25°C, preferably at a temperature in the same range as the first phase. With a view to the shelf life of the product and the possibility to directly package and transport it without cooling back, the filling is preferably 4-14°C, more preferably maximally 12°C, most preferably maximally 10°C, particularly maximally 7.0°C.

For the first phase, at least one hard or semi-hard cheese is used. A semi-hard cheese is defined as a cheese with a moisture content of 42 to 55 wt.%. A hard cheese is defined as a cheese with a moisture content of less than 42 wt.% (Cheese: Chemistry, Physics and Microbiology. Vol 1: General Aspects, P.F. Fox (Ed.), 1993, Chapman & Hall, London, ISBN 0 412 53500 9).

It has further been found that the composition of the cheese influences the ease with which the filling can be enclosed. If a relatively soft cheese is chosen, the product will be little shape-retaining. If "too short" a cheese is chosen, the closure will be less adequate. "Too short" is known to a skilled person and means a firm but breakable cheese. This is generally a very hard or old cheese. For a good shape retention and good closure, preferably a semi-hard cheese, more preferably a cheese of the Gouda type and/or a cheese of the Edam type is used. These cheeses are also suitable for obtaining a product with a high degree of smoothness, just like Maasdam cheese.

Good results have further been achieved with a combination of at least two cheeses, in particular with a combination of Edam cheese and Gouda cheese. These may, for instance, be used in a weight ratio from 5:95 to 95:5, in particular from 1:9 to 9:1. Combining cheeses allows the control of one or more properties such as texture, taste, shape retention and/or smoothness.

It has further been found that the fat content and the age of the cheeses play a role in completely enclosing the filling. It has thus been found that, for obtaining a product where the filling is completely enclosed, it is preferred to use a semi-hard or hard cheese having a fat content of more than 20 wt.% in dry matter. More preferably, the fat content is 30 to 55 wt.%, in particular 40 to 50 wt.% in dry matter.

It has further been found that a better enclosure is obtained with a cheese which is ripened. Without wishing to be bound to any theory, the inventors consider that, due to the structural degradation associated with ripening, the cheese will form better if the cheese is ripened to some extent. However, with use of a cheese with a large degree of ripening, the composite cheese product may be very soft and may possibly close less well. Therefore, preferably a cheese is used with an age of at least 15 days, in particular at least 28 days, more in particular at least 35 days. The cheese preferably has an age up to 140 days, in particular up to 100 days, more in particular up to 70 days.

The second phase of the composite cheese product may comprise one or more foodstuffs. Thus, the second phase may comprise one or more foodstuffs chosen from oil-based foodstuffs, such as one or more foodstuffs chosen from the group of mustards, pestos and mayonnaises. The second phase may comprise one or more water-based foodstuffs, such as one or more foodstuffs chosen from the group consisting of fruit pastes, fruit concentrates, membrillos, tomato pastes and tomato purées. The second phase may comprise one or more foodstuffs chosen from the group consisting of doughy pastes, cookies, crispy parts in a viscous carrier, viscous pastes and purees (optionally with one or more herbs and/or spices), flavorings, colorings, fruit pieces, vegetable pieces, fish pieces and meat pieces. The second phase may comprise one or more foodstuffs chosen from the group consisting of fresh cheeses, cream cheeses and other cheeses as long as they differ from the cheese in the first phase. Very suitable as fillings are mustard fillings, pineapple (paste/concentrate) fillings and tomato (paste/purée) fillings. Of these fillings, it has been found that the taste perception in combination with the cheese is experienced as particularly pleasant.

Because the product according to the invention is a closed composite product, the viscosity of the second phase can be chosen with more freedom than with an open composite product. With the choice of a low viscosity, a surprising effect can be obtained by the difference in viscosity with the first phase. In particular, it is possible to thereby manufacture a product with a dynamic taste perception; the taste and/or the mouth feel and/or the biting sensation can change during the consumption. For instance, a first sensation may be a firm bite when biting through the covering, and then, surprising to the consumer (because not visible from the outside), a relatively liquid sensation may occur when the filling ends up in the mouth. Thus, in one embodiment, a product according to the invention does not only have different tastes but also different consistencies providing a stimulation.

For the viscosity of the second phase, an option to be considered is a viscosity like treacle. In general, for the second phase, a viscosity between 10 and 200,000 Pa can be chosen and a yield stress between 0 and 500 Pa. For obtaining the surprising viscosity effect, the yield stress is preferably maximally 10 Pa. Then the viscosity is a zero shear viscosity measured with a constant stress rheometer at 10°C. The yield stress is the value as determined with a stress sweep, at 10°C.

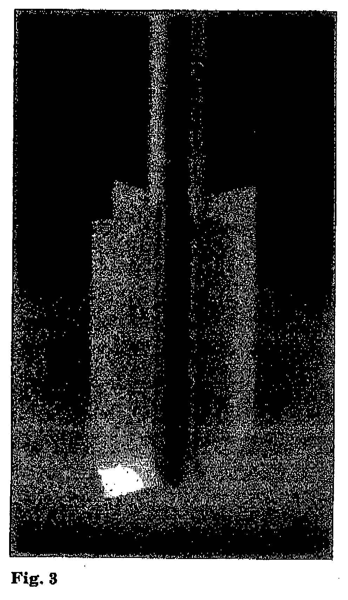

Here, the viscosity and yield stress are measured with an agitating element with vane geometry, as shown in Fig. 3. The further details of the vane are as follows:

| Dimensions: | |
| --- | --- |
| shaft diameter | : 8.00 mm |
| number of vanes | : 4 |
| vane length | : 39.70 mm |
| vane width | : 8.43 mm |
| extent to which the lower side of the vane is folded | : 3.7 mm |
| length of folded piece | : approx. 5 mm |

The water activity of the first phase and of the second phase is between 0.85 and 0.98, as can be measured with a Labmaster-Aw (Novasina, Pfäffikon, Switzerland).

With the water activity of the second phase, the texture of the covering can be controlled. Here, the "texture" is the sensory perception of the structure. Here, "structure" is defined as the spatial organization of the product, at a macro, meso as well as microscopic level.

If a second phase with a lower water activity than the water activity of the first phase is used, the texture of the covering will become dryer and firmer. By contrast, the covering can also be softened, by choosing a higher water activity. For an optimal result, care can be taken of the manner in which the water activity is adjusted. If, for instance, a lower water activity of the second phase compared to the first phase is desired, this lower water activity is preferably obtained with the aid of materials which at least substantially do not transfer to the covering, such as for instance starch, modified starch, fibers or inulin.

The pH of the first phase (in particular the cheese) for forming the covering is typically in the range from 4.5 to 6, preferably in the range from 4.9 to 6. For a good enclosure of the filling and/or formability of the covering, the pH of the first phase is preferably in the range from 5.0 to 5.8. Cheese with a relatively high pH, such as of more than 5.2, is desired for obtaining a cheese covering of which the cheese does not seem crumbly, which is in particular resistant to crack formation during transport.

Here, the pH is the pH as measured by introducing a pH electrode (such as a Mettler Toledo MI 229 Isfet pH meter) into the cheese at 20°C. The pH meter is calibrated in advance at this temperature with two calibration samples having a pH of 4.0 and a pH of 6.88.

The pH of the second phase is in the range from 2 to 6, in particular in the range from 3 to 5. For obtaining a product with an improved shelf life, the pH is preferably maximally 4.5, more preferably maximally 4.0. Here, the pH is the pH as measured in the above-described manner, provided that the electrode is introduced into the second phase.

According to the invention, it is not necessary that the pHs of the phases be accurately matched to each other, although it is possible. The pHs of the first phase and the second phase can differ more than 0.2 pH, in particular more than 0.5 pH from each other, more in particular 0.5-3 pH or 0.5-2 pH. It has been found that, due to a difference in the pHs of the two phases, the texture of the covering can be influenced by setting the pH of the second phase.

It has been found that the pH of the first phase is influenced by the pH of the second phase.

In addition, it has remarkably been found, in contrast to what a skilled person would expect, that the cheese at the interface between the two phases does not irreversibly denature with the choice of a low pH, for instance between pH = 2 and pH = 5, of the filling. By now choosing the pH of the second phase to be, for instance, lower than the pH of the cheese, the pH of the cheese can be influenced. Thereby the texture of the cheese can be influenced. Thus, a higher pH (for instance 5.6 or higher) yields a more elastic product, while a lower pH (such as 5.2 or lower) yields a firmer, more crumbly product.

It has further been found that, particularly in a product of which the pH of the covering phase is relatively high, after the pH equilibrium between covering phase and filling has set (which typically takes a few days to a few weeks), denaturation of protein in the covering phase is at least substantially prevented. This is advantageous with a view to a low extent of egress of moisture from the covering phase. The pH at which moisture egress occurs to a certain extent depends on the nature of the covering phase. For cheese, the degree of ripening and the type of cheese play a role. In order to prevent or at least reduce undesired moisture egress, a pH of the composite product of more than 4.9 is typically desired.

The final pH of the composed product is a function of the pH of the filling (the pH during production of the composite product), the pH of the covering phase (the pH during production of the composite product), the buffer capacity of the covering phase and of the filling, and the ratio of filling to covering phase. The final pH will set within a few days to a few weeks. If the final pH is too low, so much protein can denature in the covering phase that undesired moisture egress occurs.

Besides by matching the initial pH of the covering phase and the filling to each other, and/or by choosing a raw material with a relatively high pH for the covering phase, the denaturation of protein in the covering phase, if any, can be prevented or at least reduced by using a filling with a low buffer capacity and/or a covering phase with a high buffer capacity. Here, for practical reasons, reducing the buffer capacity of the filling is preferred.

The buffer capacity of the filling can be determined by intensively mixing 25 grams of filling with 75 grams of water at room temperature (20°C). The pH of this mixture is measured. To this mixture, 20 ml of 0.1M NaOH is added at room temperature. The pH is measured again after 24 hours. Here, the buffer capacity is defined as $0.08/(pH_{after}-pH_{before})$ with mmol $OH^-$/(grams of filling x pH unit) as a unit.

The buffer capacity of the covering phase (such as cheese) can be determined by intensively mixing 25 grams of the material for the covering phase with 75 grams of water at room temperature (20°C) and then measuring the pH of this mixture. Then, to this mixture, 20 ml of 0.1M HCl is added at room temperature (20°C). The pH is measured again after 24 hours. Here, the buffer capacity is defined as $0.08/(pH_{before} - pH_{after})$ with mmol $H^+$/(grams of covering phase x pH unit) as a unit.

By measuring the above parameters, with the aid of a calculation, it can be determined in advance what the pH of the composite product will be.

$$pH_{composite\ product} = pH_{cheese} - \frac{R}{BC_K} \cdot \frac{pH_k - pH_v}{\frac{1}{BC_v} + \frac{R}{BC_k}}$$

with

$BC_k$ = buffer capacity of cheese
$BC_v$ = buffer capacity of filling
$pH_k$ = pH of the cheese
$pHv$ = pH of the filling
$R$ = weight of cheese / weight of filling

If the calculated pH of the composite product is so low that, for a particular product according to the invention, the risk of undesired moisture egress is too high, then the pH or the buffer capacity of the filling (and/or optionally the covering phase) can be adjusted in a manner known to a skilled person.

Another approach is not to measure the buffer capacities, but to measure the pH of the composite product at least 20 days after manufacture (by intensively mixing the product with an amount of water corresponding with three times the mass of the product and measuring the pH at room temperature). Also in that case, should the pH of the composite product be too low (usually lower than 4.9), then the pH or the buffer action of the filling can be adjusted.

In addition, the shelf life of the cheese can be prolonged by adding specific ingredients to the second phase, in that these specific ingredients partly transfer to the cheese. Here, options to be considered are conventional ingredients such as for instance nisin, potassium sorbate, benzoate or sorbic acid. In addition, herbs, spices or fruit preparations with known antimicrobial activity can be added. Also, the shelf life can be prolonged by choosing a low pH of the second phase, in particular a pH of maximally 4.5, more in particular of maximally 4.0.

A shelf life of 30 days or more is realizable by means of the invention, in particular a shelf life of 50 to 120 days in cooled conditions. For a longer shelf life (more than a few days), it is desired to choose a cheese with a low degree of contamination and package the product in a protective atmosphere (low-oxygen or oxygen-free).

The taste of the first phase can also be influenced by the choice of the second phase. Thus, the taste of the covering can be influenced by adding a cheese aroma to the second phase with a taste which is different from the cheese in the first phase. Thus, a young Gouda cheese can be provided with a ripened taste by adding a water-soluble cheese aroma of a ripened cheese to the second phase.

The weight percentage of the second phase (filling) is typically at least 10% of the composite product. In order to realize a good closure and a solid outer wall, the weight percentage of the second phase is typically maximally 60%. A high content of covering phase in further particularly advantageous with a view to a low tendency to undesired loss of moisture. More preferably, the weight percentage of the second phase is maximally 30%, in particular maximally 20%, more in particular about 15%. The invention is now illustrated on the basis of the following examples.

Example 1:

Gouda rindless cheese of 6 weeks (48% fat in dry matter) was cut into blocks of about 5x8x6 cm. This cheese was added to a first inlet funnel of a Rheon Cornucopia 400. The temperature of the cheese was 6°C. A mustard filling of 10°C was added to the second inlet funnel. The Aw of the cheese was 0.96, the Aw of the filling was 0.97. The pH of the cheese was 5.3, the pH of the filling was 3.7. The composition of the mustard was as follows:
mustard (water, mustard seed, vinegar, salt, spices, herbs) (46%), water, rape oil, spices (3.3% mustard seed), vinegar, modified maize starch, glycerol, thickening agents E412/E464, salt, citric acids E270/E330, gelatin powder, coloring E171, preservatives E202/E211, sweeteners E950/E951.

The yield stress of the mustard was 1 Pa, the zero shear viscosity was 3,000 Pa·s. The feed rate of the cheese was 55 kg/hour. The feed rate of the filling was 10 kg/hour. The two phases were coextruded. The outside was shaped to be rectangular (with right angles) with a dimension of 15 x 20 mm. The filling was also shaped to be square with an edge of 6 mm. The egressing cheese string was compressed with a diaphragm. The length of the final products was 6 cm. The product is a smooth cheese product with sharp corners and rounded ends (Fig. 1).

After 20 days, the pH of the cheese was found to be decreased by 0.2 units. As a result, the cheese has become somewhat dryer and more crumbly.

The above-described process was repeated with more filling (30%), with a filling shaped to be round (Fig. 2).

The above-described process was repeated with Maasdam rindless cheese of 5 weeks (45% fat in dry matter). The composite end product is a smooth cheese product with sharp corners and rounded ends.

The process was repeated with Edam rindless cheese of 8 weeks (40% fat in dry matter). The composite product was a cheese product with smooth sides and rounded ends. The edges were somewhat less smooth than with Gouda cheese.

The process was repeated with a different shape of the outside, namely a round outer phase with a diameter of 15 mm. The inner filling is also round with a diameter of 6 mm. The length of the product is set to 1.5 centimeters, so that a spherical product is created.

Example 2:

Tomato filling. A tomato filling of 7°C was fed to the second inlet funnel. The Aw of the cheese was 0.96, the Aw of the filling was 0.94. The pH of the cheese was 5.3, the pH of the filling was 3.2. The composition of the filling was as follows:

tomatoes (54%), water, sugar, spice extract, olive oil, salt, gelatin powder, onion, thickening agents E412/E416, vinegar, herbs, garlic, pepper, glycerol, citric acid E270, spices, broth (hydrolyzed soy protein, salt, wheat glucose syrup, hydrogenated palm oil), preservatives E202/E211.

The yield stress of the filling was 70 Pa, the zero shear viscosity was 60,000 Pa·s.

The process was repeated with a cheese mix of 70% Gouda cheese (48% fat in dry matter) and 30% Red Hot Dutch (an Edam cheese with a fat percentage of 40% in dry matter to which chili pepper particles have been added). Both cheeses were cut into blocks of 4x4x4 cm and mixed before feeding to the hopper. The product obtained therewith had a smooth outside appearing uniform in which red pepper particles were visible. Upon consumption, it was found that the texture of the cheese resembled Gouda cheese. The pepper particles provided an extra hot taste sensation.

Example 3:

Pineapple filling. A pineapple filling of 7°C was fed to the second inlet funnel. The Aw of the cheese was 0.96, the Aw of the filling was 0.98. The pH of the cheese was 5.3, the pH of the filling was 3.8. The composition of the filling was as follows:

pineapple (48%), water, sugar, vinegar, thickening agents E412/E415, rape oil, salt, citric acids E270/E330, aromas, preservatives E202/E211, coloring E160a.

The yield stress of the filling was 40 Pa, the zero shear viscosity was 35,000 Pa·s.

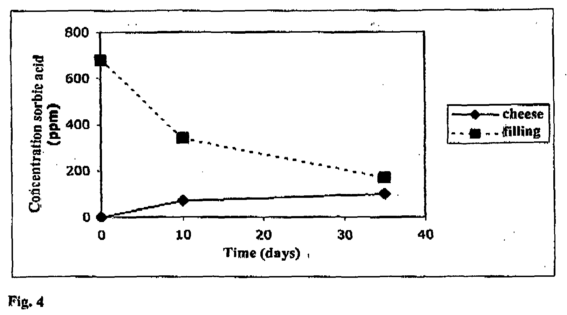

Of the shaped cheese product, the sorbic acid content in the filling and the covering was measured as a function of time. The results are shown in Fig. 4. This measurement shows that the filling can be used for influencing the covering: a part of the sorbic acid transfers to the cheese in the course of time and provides extra preservation of the cheese product in this manner.

Example 4:

Gouda rindless cheese of 6 weeks (48% fat in dry matter) was cut into blocks of about 4x4x4 cm. Edam rindless cheese of 10 weeks was cut into blocks of about 4x4x4 cm. The blocks of cheese were mixed in a ratio of 15 weight percent of Gouda and 85 weight percent of Edam.

This mixture was added to a first inlet funnel of a Rheon Cornucopia 400. The temperature of the cheese was 6°C. A mustard filling of 10°C was added to the second inlet funnel. The Aw of the Gouda cheese was 0.96, that of the Edam cheese was 0.965. The Aw of the filling was 0.97. The pH of the Gouda cheese was 5.3, the pH of the Edam cheese was 5.25, the pH of the filling was 3.7. The composition of the mustard was as follows:

mustard (water, mustard seed, vinegar, salt, spices, herbs) (46%), water, rape oil, spices (3.3% mustard seed), vinegar, modified maize starch, glycerol, thickening agents E412/E464, salt, citric acids E270/E330, gelatin powder, coloring E171, preservatives E202/E211, sweeteners E950/E951.

The yield stress of the mustard was 1 Pa, the zero shear viscosity was 3,000 Pa·s. The feed rate of the cheese was 55 kg/hour. The feed rate of the filling was 10 kg/hour. The two phases were coextruded. The outside was shaped to be rectangular (with right angles) with a dimension of 15 x 20 mm. The filling was also shaped to be square with an edge of 6 mm. The egressing cheese string was compressed with a diaphragm. The length of the final products was 6 cm. The product is a smooth cheese product with small crack in the corners and rounded ends. The product was firmer than in example 1.

## Claims

1. A method for preparing a shaped and filled cheese product, comprisingcoextruding afirstedible phase and a second edible phase, wherein the second phase (filling) is completely enclosed by the first phase (covering), which first phase comprises semi-hard and/or hard natural cheese, wherein a semi-hard cheese has a moisture content of 42 to 55 wt.%, and a hard cheese has a moisture content of less than 42 wt.%, wherein the coextruded phases are compressed with the aid of a diaphragm valve, such that the first phase completely encloses the second phase and a discrete productis formed, and wherein, during the extrusion, at least the first phase has a temperature of maximally 7.0°C, wherein the pH of the second phase is between 2 and 6, and wherein the water activity of the first phase and of the second phase is between 0.85 and 0.98.

2. A method according to claim 1, wherein the temperature of the first phase is 4.0-7.0°C.

3. A method according to claim 1 or 2, wherein the pH of the second phase is maximally 4.5.

4. A method according to any one of the preceding claims, wherein the pH of the first phase is at least 0.5 pH higher than the pH of the second phase.

5. A method according to anyone of the preceding claims, wherein the first phase comprises at least one hard or semi-hard natural cheese chosen from the group consisting of: Gouda cheeses, Edam cheeses, Maasdam cheeses, cheeses with a fat content of at least 20 wt.% in dry matter, cheeses with an age of minimally 15 days, cheeses with added herbs and cheeses with added spices.

6. A method according to anyone of the preceding claims, wherein the second phase comprises at least one ingredient chosen from the group consisting of mustard, pesto, mayonnaise, fruit paste, fruit concentrate, membrillo, tomato paste, tomato purée, doughy pastes, cookies, crispy parts in a viscous carrier, viscous pastes, purees, aromas, colorings, fruit pieces, vegetable pieces, fish pieces, meat pieces and cheeses different from the cheese in the first phase.

7. A method according to an one of the preceding claims, wherein the extruded productis packaged and the packaging step is part of the same continuous process line as the extrusion.

8. A method according to any one of the preceding claims, wherein at least a third phase is coextruded with the first and the second phase.

9. An extruded shaped natural cheese product obtainable by means of a method according to any one of the preceding claims, comprising a covering and a filling, wherein the covering comprises a semi-hard and/or hard natural cheese, wherein a semi-hard cheese has a moisture content of 42 to 55 wt.%, and a hard cheese has a moisture content of less than 42 wt.%, the covering completely encloses the filling, and the outer surface of the covering has a smoothly flowing shape at least at the ends of the product.

10. A shaped cheese product according to claim 9, comprising a covering which comprises a semi-hard and/or hard natural cheese and a filling, wherein the covering completely encloses the filling and wherein the filling has a pH which is more than 0.2 pH lower than the pH of the covering.

11. A shaped cheese product according to claim 9 our 10, comprising a covering comprising a semi-hard and/or hard natural cheese and a filling, wherein the covering completely encloses the filling, wherein the covering comprise at least one hard or semi-hard natural cheese chosen from the group consisting of Gouda cheeses with a fat content of at least 20 wt.% in dry matter, Gouda cheeses with an age of minimally 15 days, Edam cheeses with a fat content of at least 20 wt.% in dry matter and Edam cheeses with an age of minimally 15 days, Maasdam cheeses with a fat content of at least 20 wt.% in dry matter and Maasdam cheeses with an age of minimally 15 days.

12. A shaped cheese product according to anyone of claims 9-11, comprising a covering comprising a semi-hard and/or hard natural cheese and
a filling, wherein the covering completely encloses the filling, wherein the filling comprise an ingredient chosen from the group consisting of pineapple,
mustard and tomato.

13. A shaped cheese product according to any of claims 9-12, wherein the dimension in every direction is between 1 and 25 cm.

14. A shaped cheese product according bo anyone of claims 9-12, wherein the dimension in at least one direction is maximally 5 cm.

15. A shaped cheese product according to anyone of claims 9-14,
wherein the weight percentage of the second phase, based on the sum of the first and the second phase, is 10-60%

16. A shaped cheese product according to anyone of claims 9-15,
wherein the product is unheated.


**Patentansprüche**

1. Verfahren zur Herstellung eines geformten und gefüllten Käseprodukts, umfassend das Coextrudieren einer ersten essbaren Phase und einer zweiten essbaren Phase, wobei die zweite Phase (Füllung) vollständig durch die erste Phase (Bedeckung) eingeschlossen ist, welche erste Phase halbharten und/oder harten Naturkäse umfasst, wobei ein halbharter Käse einen Feuchtigkeitsgehalt von 42 bis 55 Gew.-% hat, und ein Hartkäse einen Feuchtigkeitsgehalt von weniger als 42 Gew.-% hat, wobei die coextrudierten Phasen mithilfe eines Membranventils so komprimiert werden, dass die erste Phase die zweite Phase vollständig einschließt und ein einzelnes Produkt gebildet wird, und wobei während der Extrusion mindestens die erste Phase eine Temperatur von maximal 7,0°C hat, wobei der pH der zweiten Phase zwischen 2 und 6 liegt und wobei die Wasseraktivität der ersten Phase und der zweiten Phase zwischen 0,85 und 0,98 liegt.

2. Verfahren nach Anspruch 1, wobei die Temperatur der ersten Phase 4,0-7,0°C beträgt.

3. Verfahren nach Anspruch 1 oder 2, wobei der pH der zweiten Phase maximal 4,5 beträgt.

4. Verfahren nach einem der vorhergehenden Ansprüche, wobei der pH der ersten Phase mindestens 0,5 pH höher ist als der pH der zweiten Phase.

5. Verfahren nach einem der vorhergehenden Ansprüche, wobei die erste Phase mindestens einen harten oder halbharten Naturkäse umfasst, ausgewählt aus der Gruppe bestehend aus: Gouda-Käsen, Edamer-Käsen, Maasdamer-Käsen, Käsen mit einem Fettgehalt von mindestens 20 Gew.-% in der Trockenmasse, Käsen mit einem Alter von mindestens 15 Tagen, Käsen mit zugefügten Kräutern und Käsen mit zugefügten Gewürzen.

6. Verfahren nach einem der vorhergehenden Ansprüche, wobei die zweite Phase mindestens eine Zutat umfasst, ausgewählt aus der Gruppe bestehend aus Senf, Pesto, Mayonnaise, Fruchtpaste, Fruchtkonzentrat, Membrillo, Tomatenmark, Tomatenpüree, teigigen Pasten, Keksen, knusprigen Teilen in einem viskosen Träger, viskosen Pasten, Pürees, Aromen, Farbstoffen, Fruchtstücken, Gemüsestücken, Fischstücken, Fleischstücken und Käsen, die sich vom Käse in der ersten Phase unterscheiden.

7. Verfahren nach einem der vorhergehenden Ansprüche, wobei das extrudierte Produkt verpackt ist und der Verpackungsschritt Teil derselben kontinuierlichen Prozesslinie wie die Extrusion ist.

8. Verfahren nach einem der vorhergehenden Ansprüche, wobei mindestens eine dritte Phase mit der ersten und der zweiten Phase coextrudiert wird.

9. Extrudiertes geformtes Naturkäseprodukt, erhältlich mittels eines Verfahrens nach einem der vorhergehenden Ansprüche, umfassend eine Bedeckung und Füllung, wobei die Bedeckung einen halbharten und/oder harten Naturkäse umfasst, wobei ein halbharter Käse einen Feuchtigkeitsgehalt von 42 bis 55 Gew.-% hat und ein Hartkäse einen Feuchtigkeitsgehalt von weniger als 42 Gew.-% hat, wobei die Bedeckung die Füllung vollständig einschließt und die Außenfläche der Bedeckung eine glattfließende Form, zumindest an den Enden des Produkts, hat.

10. Geformtes Käseprodukt nach Anspruch 9, umfassend eine Bedeckung, die einen halbharten und/oder harten Naturkäse und eine Füllung umfasst, wobei die Bedeckung die Füllung vollständig einschließt und wobei die Füllung einen pH hat, der mehr als 0,2 pH niedriger als der pH der Bedeckung ist.

11. Geformtes Käseprodukt nach Anspruch 9 oder 10, umfassend eine Bedeckung umfassend einen halbharten und/oder harten Naturkäse und eine Füllung, wobei die Bedeckung die Füllung vollständig einschließt, wobei die Bedeckung mindestens einen harten oder halbharten Naturkäse umfasst, ausgewählt aus der Gruppe bestehend aus Gouda-Käsen mit einem Fettgehalt von mindestens 20 Gew.-% in der Trockenmasse, Gouda-Käsen mit einem Alter von mindestens 15 Tagen, Edamer-Käsen mit einem Fettgehalt von mindestens 20 Gew.-% in der Trockenmasse, Edamer-Käsen mit einem Alter von mindestens 15 Tagen, Maasdamer-Käsen mit einem Fettgehalt von mindestens 20 Gew.-% in der Trockenmasse und Maasdamer-Käsen mit einem Alter von mindestens 15 Tagen.

12. Geformtes Käseprodukt nach einem der Ansprüche 9-11, umfassend eine Bedeckung umfassend einen halbharten und/oder harten Naturkäse und eine Füllung, wobei die Bedeckung die Füllung vollständig einschließt, wobei die Füllung eine Zutat umfasst, ausgewählt aus der Gruppe bestehend aus Ananas, Senf und Tomate.

13. Geformtes Käseprodukt nach einem der Ansprüche 9-12, wobei die Abmessung in jeder Richtung zwischen 1 und 25 cm beträgt.

14. Geformtes Käseprodukt nach einem der Ansprüche 9-12, wobei die Abmessung in mindestens einer Richtung höchstens 5 cm beträgt.

15. Geformtes Käseprodukt nach einem der Ansprüche 9-14, wobei der Gewichtprozentsatz der zweiten Phase, basierend auf der Summe der ersten und der zweiten Phase, 10-60 % beträgt.

16. Geformtes Käseprodukt nach einem der Ansprüche 9-15, wobei das Produkt nicht erhitzt ist.

**Revendications**

1. Procédé de préparation d'un produit façonné et fourré à base de fromage, comprenant la coextrusion d'une première phase comestible et d'une deuxième phase comestible, dans lequel la deuxième phase (fourrage) est complètement enfermée dans la première phase (enrobage), laquelle première phase comprend du fromage naturel à pâte demi-dure et/ou dure, dans lequel un fromage à pâte demi-dure a une teneur en humidité de 42 à 55 % en poids, et un fromage à pâte dure a une teneur en humidité inférieure à 42 % en poids, dans lequel les phases coextrudées sont comprimées à l'aide d'une vanne à membrane, de telle sorte que la première phase enferme complètement la deuxième phase et qu'un produit discret soit formé, et dans lequel, au cours de l'extrusion, au moins la première phase a une température de 7,0°C maximum, dans lequel le pH de la deuxième phase est compris entre 2 et 6, et dans lequel l'activité de l'eau de la première phase et de la deuxième phase est comprise entre 0,85 et 0,98.

2. Procédé selon la revendication 1, dans lequel la température de la première phase est de 4,0 à 7,0°C.

3. Procédé selon la revendication 1 ou 2, dans lequel le pH de la deuxième phase est de 4,5 au maximum.

4. Procédé selon l'une quelconque des revendications précédentes, dans lequel le pH de la première phase est un pH supérieur d'au moins 0,5 au pH de la seconde phase.

5. Procédé selon l'une quelconque des revendications précédentes, dans lequel la première phase comprend au moins un fromage naturel à pâte dure ou demi-dure choisi dans le groupe constitué de fromages de Gouda, de fromages d'Edam, de fromages de Maasdam, de fromages ayant une teneur en matière grasse d'au moins 20 % en poids dans la matière sèche, de fromages d'un âge minimal de 15 jours, de fromages auxquels ont été ajoutés des fines herbes et de fromages auxquels ont été ajoutées des épices.

6. Procédé selon l'une quelconque des revendications précédentes, dans lequel la deuxième phase comprend au moins un ingrédient choisi dans le groupe constitué de moutarde, pesto, mayonnaise, pâte de fruit, concentré de fruits, coing, concentré de tomates, purée de tomates, pâtes pâteuses, biscuits, parties croustillantes dans une substance visqueuse, pâtes visqueuses, purées, aromes, colorants, morceaux de fruits, morceaux de légumes, morceaux de poisson, morceaux de viande et fromages différents du fromage de la première phase.

**7.** Procédé selon l'une quelconque des revendications précédentes, dans lequel le produit extrudé est conditionné et l'étape de conditionnement fait partie de la même chaîne de fabrication continue que l'extrusion.

**8.** Procédé selon l'une quelconque des revendications précédentes, dans lequel au moins une troisième phase est coextrudée avec la première et la deuxième phase.

**9.** Produit à base de fromage naturel façonné extrudé pouvant être obtenu à l'aide d'un procédé selon l'une quelconque des revendications précédentes, comprenant un enrobage et un fourrage, dans lequel l'enrobage comprend un fromage naturel à pâte demi-dure et/ou dure, dans lequel un fromage à pâte demi-dure a une teneur en humidité de 42 à 55 % en poids, et un fromage à pâte dure a une teneur en humidité inférieure à 42 % en poids, l'enrobage enferme complètement le fourrage, et la surface externe de l'enrobage a une forme fluide au moins aux extrémités du produit.

**10.** Produit à base de fromage façonné selon la revendication 9, comprenant un enrobage qui comprend un fromage naturel à pâte demi-dure et/ou dure et un fourrage, dans lequel l'enrobage enferme complètement le fourrage et dans lequel le fourrage a un pH qui est inférieur de plus de 0,2 au pH de l'enrobage.

**11.** Produit à base de fromage façonné selon la revendication 9 ou 10, comprenant un enrobage comprenant un fromage naturel à pâte demi-dure et/ou dure et un fourrage, dans lequel l'enrobage enferme complètement le fourrage, dans lequel l'enrobage comprend au moins un fromage naturel à pâte dure et/ou demi-dure choisi dans le groupe constitué de fromages de Gouda ayant une teneur en matière grasse d'au moins 20 % en poids dans la matière sèche, de fromages de Gouda d'un âge minimal de 15 jours, de fromages d'Edam ayant une teneur en matière grasse d'au moins 20 % en poids dans la matière sèche et de fromages d'Edam d'un âge minimal de 15 jours, de fromages de Maasdam ayant une teneur en matière grasse d'au moins 20 % en poids dans la matière sèche et de fromages de Maasdam d'un âge minimal de 15 jours.

**12.** Produit à base de fromage façonné selon l'une quelconque des revendications 9 à 11, comprenant un enrobage comprenant un fromage naturel à pâte demi-dure et/ou dure et un fourrage, dans lequel l'enrobage enferme complètement le fourrage, dans lequel le fourrage comprend un ingrédient choisi dans le groupe constitué d'ananas, de moutarde et de tomate.

**13.** Produit à base de fromage façonné selon l'une quelconque des revendications 9 à 12, dans lequel la dimension dans chaque direction est comprise entre 1 et 25 cm.

**14.** Produit à base de fromage façonné selon l'une quelconque des revendications 9 à 12, dans lequel la dimension dans au moins une direction est de 5 cm maximum.

**15.** Produit à base de fromage façonné selon l'une quelconque des revendications 9 à 14, dans lequel le pourcentage en poids de la deuxième phase, basé sur la somme de la première et de la seconde phase, est de 10 à 60 %.

**16.** Produit à base de fromage façonné selon l'une quelconque des revendications 9 à 15, dans lequel le produit est non chauffé.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 713649 A1
- EP 0358983 A1
- US 2003129281 A
- EP 1079698 A

**Non-patent literature cited in the description**

- Cheese: Chemistry, Physics and Microbiology. General Aspects. Chapman & Hall, 1993, vol. 1